# EUROPEAN PATENT APPLICATION

(11) **EP 4 520 458 A1**
(43) Date of publication of application: **12.03.2025**
(21) Application number: 23799738.2
(22) Date of filing: 05.05.2023
(51) Int. Cl.: B22F 1/0655, B22F 1/142, C08L 33/12, B22F 3/10

(54) **CONDUCTIVE HOLLOW METAL PARTICLES AND PREPARATION METHOD THEREFOR**

(30) Priority: 06.05.2022 KR 20220056066
(71) Applicant: SNC Tech Co., Ltd., Gwangju-si, Gyeonggi-do 12815 (KR)
(72) Inventor: KIM, Wan Goo, Gyeonggi-do (KR)
(74) Representative: AWA Sweden AB
(86) International application number: PCT/KR2023/006182
(87) International publication number: WO 2023/214857

(57) **Abstract**

The present invention relates to hollow conductive metal particles with softness properties. The hollow conductive particles with softness properties, of the present invention, are metal particles in which, when external pressure is applied thereto, metal particle metal layers do not break and layers of conductive particles with softness properties change according to the surface morphology of objects to which same is applied. The present invention relates to the hollow conductive metal particles and a preparation method therefor.

## Description

### [Technical Field]

The present invention relates to conductive hollow metal particles and a method of manufacturing the same.

### [Background Art]

Conventionally, metal particles are used in the electrical connection of anisotropic conductive film, devices or substrates, and an example thereof includes hollow metal particles. However, conventional hollow metal particles have a problem in that they do not stably provide the contact area for providing sufficient conductivity to connection targets such as terminals and the like. Also, conventional hollow metal particles have a broad particle size distribution, and since such hollow metal particles having a broad particle size distribution have non-uniform sizes, only some of the large particles participate in connection, and thus the number of particles and contact area thereof participating in the connection are not sufficiently provided. As a result, there is a problem in that sufficient conductivity is not provided to connection targets.

### [Disclosure]

### [Technical Problem]

The present invention is directed to solving the above-described problems of the related art and providing conductive hollow metal particles with softness, which are capable of increasing the contact area with connection targets and accordingly improving conductivity, and a method of manufacturing the same.

### [Technical Solution]

One aspect of the present invention provides hollow conductive metal particles with softness, which include a metal layer on a surface thereof and a hollow particle structure in which an inner core particle fixed adjacent to an inside of the metal layer is not present and an empty space adjacent to the inside of the metal layer is present, wherein when the conductive metal particles are deformed at 20% strain by pressurization, there is no portion in which the metal layer is cracked or broken so that it becomes discontinuous.

In an embodiment, when the conductive metal particles are deformed at 20% strain by pressurization while the metal layer is not cracked or broken so that it is not discontinuous, a force applied to the conductive metal particles in the pressurization may be 0.5 mN or more and 20 mN or less.

In an embodiment, the metal layer may contain at least one selected from the group consisting of copper, silver, gold, indium, nickel, and an alloy thereof.

In an embodiment, the hollow conductive metal particles may have an internal solid material that is not fixed adjacent to the inside of the metal layer, and the maximum particle diameter or length of the internal solid material may be 90% or less of the maximum particle diameter of the conductive metal particles.

In an embodiment, the hollow conductive metal particles may have an internal solid material that is not fixed adjacent to the inside of the metal layer, and when the conductive metal particles are deformed at 20% strain by pressurization, the internal solid material may not exert a force to support the metal layer by resisting deformation of the metal layer.

In an embodiment, the hollow conductive metal particles may have an internal solid material that is not fixed adjacent to the inside of the metal layer, and the internal solid material may contain at least one of a polymer resin or a carbide thereof.

In an embodiment, the hollow metal particles may have a particle diameter of 0.01 µm or more and 1,000 µm or less.

In an embodiment, the metal layer may have a thickness of 0.002 µm or more and 50 µm or less.

In an embodiment, the metal layer may include a first plating layer and a second plating layer formed on the first plating layer and containing at least one selected from the group consisting of copper, silver, gold, indium, nickel, and an alloy thereof.

Another aspect of the present invention provides a method of manufacturing the hollow conductive metal particles, which includes an inner core particle removal process of heating conductive metal particles in which an inner core particle containing a polymer resin is coated with a metal layer to remove all or part of the inner core particle; and an annealing process of heating the conductive metal particles to a temperature equal to or higher than a heating temperature of the inner core particle removal process.

In an embodiment, the method may further include, before the inner core particle removal process, a metal coating layer formation process of coating the inner core particle containing a polymer resin with a metal layer.

In an embodiment, the method may further include, after the annealing process, a process of forming an additional metal layer coating on the metal layer.

In an embodiment, the polymer resin may contain at least one resin selected from a polymethyl methacrylate resin, polyacrylonitrile, a polystyrene resin, an acrylonitrile-styrene-butadiene resin, a vinyl resin, a polycarbonate resin, a polyacetal resin, a polysulfone resin, a polyphenyloxide resin, a polyester resin, a polyolefin resin, and a polyurethane resin.

In an embodiment, the inner core particle may have a spherical, platy, fibrous, or amorphous shape.

In an embodiment, the inner core particle may have a particle size distribution coefficient of variation (C.V) of 40% or less as calculated by the following Equation 1. Coefficient of variation (C.V, %) = (Standard deviation of particle diameter/Average particle diameter) × 100%

In an embodiment, a heating temperature of the inner core particle removal process may be set to a temperature equal to or higher than a pyrolysis temperature at which the polymer resin of the inner core particle is gasified by breaking the polymer chain of the resin by heat in the conductive metal particle.

In an embodiment, in the inner core particle removal process, the gasified resin may be discharged to the outside of the metal layer through pores formed in the metal layer.

In an embodiment, after the inner core particle removal process, an inner core material may remain inside the metal layer, and the mass of the inner core material may be 90% by mass or less relative to the mass of the inner core particle before the inner core particle removal process.

In an embodiment, a heating temperature of the annealing process may be set to a temperature equal to or higher than a temperature at which a recrystallized aggregate structure of the metal layer is formed and a temperature equal to or lower than a temperature at which a proportion of the area of the metal layer in the total surface area of the conductive metal particles is 80% or more after the annealing process.

In an embodiment, in the inner core removal process, a heating temperature may be set to 250 to 600 °C, and a heating time may be set to 30 minutes to 3 hours.

In an embodiment, when the metal layer is a nickel-containing metal layer, a heating temperature and heating time of the annealing process may be set to 600 to 800 °C and 20 minutes to 3 hours, respectively.

### [Advantageous Effects]

According to the present invention, hollow metal particles with softness, which are capable of increasing the contact area with connection targets and improving conductivity, can be provided.

### [Description of Drawings]

FIGS. 1 and 2 are images showing the deformed shape of hollow metal particles with softness according to the present invention after external pressurization.
FIGS. 3 to 6 are images showing the deformed shape of hollow metal particles that have not undergone a softening process according to the present invention after external pressurization.
FIG. 7 is an image showing a hollow metal particle in which a metal layer is broken while an inner core particle is not completely decomposed.
FIG. 8 is an image showing hollow metal particles when annealing is performed at a temperature above the temperature range of an annealing process according to the present invention.
FIG. 9 is an image showing the deformed shape of a hollow metal particles with softness according to the present invention after a single particle thereof is pressurized with a predetermined force.
FIG. 10 is an image showing the deformed shape of hollow metal particles that have not undergone a softening process according to the present invention after a single particle thereof is pressurized with a predetermined force.
FIG. 11 is a graph showing a change in resistance when hollow conductive metal particles with softness according to the present invention and conventional conductive metal particles with no softness and an inner core particle are pressurized.

### [Modes of the Invention]

Hereinafter, hollow conductive metal particles with softness and a method of manufacturing the same according to the present invention will be described in further detail.

### <Conductive metal particles>

The conductive metal particles according to the present invention have a conductive layer including a metal layer, and are hollow conductive metal particles in which an empty space is formed in the inside adjacent to the conductive layer because all or part of an inner core particle used in a manufacturing process to be described below is removed from the inside of the conductive metal particle.

In the conductive metal particles according to the present invention, a solid material may not substantially remain inside the conductive layer of the conductive metal particles by removing all of an inner core particle used in a manufacturing process to be described below from the inside thereof.

Alternatively, in the conductive metal particles according to the present invention, even when part of an inner core particle material and/or a pyrolysis product is not completely removed but remains in a solid state after a pyrolysis process in an inner core particle removal process and an annealing process according to the present invention, which are to be described below, the remaining internal solid material may be present while not supporting the conductive layer in the conductive metal particle. In other words, in the conductive metal particles according to the present invention, when the conductive metal particles are deformed at a predetermined strain as the conductive layer is pressurized by a force applied from the outside of the conductive metal particle, the internal solid material may be present in the particle while not supporting the conductive layer in a direction that resists the deformation. Hereinafter, as described above, part of an inner core particle material and/or a pyrolysis product, which is not completely removed but remains in a solid state in the conductive metal particle even after a pyrolysis process in an inner core particle removal process and an annealing process according to the present invention, is referred to as an "internal solid material."

For example, when the conductive metal particles are deformed at 20% strain by pressurization, the internal solid material may be present without a support structure that resists the deformation of the conductive layer by supporting the conductive layer from the inside of the particle. In this case, strain may be measured as the rate of change in length of the particle before and after the particle is deformed in the pressurization direction, and may be appropriately selected according to a connection environment in which the conductive metal particles are applied. In other words, in the present invention, when the internal solid material is present in the conductive metal particle, the maximum particle diameter or length of the internal solid material may be a predetermined proportion or less of the maximum particle diameter of the conductive metal particles. Preferably, the maximum particle diameter or length of the internal solid material may be 90% or less, more preferably, 80% or less, 60% or less, 40% or less, 20% or less, 10% or less, 5% or less, 3% or less, 1% or less, or 0.1% or less of the maximum particle diameter of the conductive metal particles.

In addition, in the present invention, a small amount of a carbon material produced by carbonizing an inner core material may remain as a pyrolysis product of an inner core particle material inside the conductive layer, and these particles are also the hollow conductive metal particles according to the present invention because an empty space is formed in the inside adjacent to the conductive layer and the remaining carbon material occupies only part of the space inside.

In the conductive metal particles according to the present invention, when the internal solid material is present, the internal solid material may have any shape and may be present in the form in which it freely moves in the particle or it is attached to a portion of the inside of the particle.

The metal layer according to the present invention may contain at least one selected from the group consisting of copper, silver, gold, indium, nickel, and an alloy thereof. Preferably, nickel or a nickel alloy may be contained in consideration of manufacturing costs.

The conductive metal particles according to the present invention have softness so that the metal layer is not cracked or broken when pressurized by an external force within a predetermined range, and preferably have softness so that the force applied at 20% strain at which the metal layer is not cracked or broken is 0.5 mN to 20 mN. Therefore, when the conductive metal particles according to the present invention are pressurized by conductive connection targets, the contact area with the connection targets may be increased while the metal layer is not cracked or broken, and as a result, electrical resistance may be reduced in connection with connection targets when current flows.

The size of the conductive metal particles according to the present invention is not particularly limited, and for example, the average particle diameter thereof may be 0.01 µm or more and 1,000 µm or less, preferably 0.1 µm or more and 500 µm or less, and more preferably 0.5 µm or more and 300 µm or less. Alternatively, the size of the conductive metal particles according to the present invention may be in a range in which the following thickness range of the conductive layer is added to the above particle diameter range.

In addition, the thickness of the conductive layer in the conductive metal particles according to the present invention is not particularly limited, and may be 0.002 µm or more and 50 µm or less, preferably 0.02 µm or more and 50 µm or less, and more preferably 0.1 µm or more and 20 µm or less or 0.15 µm or more and 15 µm or less.

### <Method of manufacturing conductive metal particles>

A method of manufacturing the conductive metal particles according to the present invention includes an inner core particle removal process and an annealing process and may further include a metal coating layer formation process and/or an additional coating layer formation process. Hereinafter, each process will be described in detail.

### <Metal coating layer formation process>

The metal coating layer formation process according to the present invention is a process of forming a metal coating layer on an inner core particle.

In the present invention, a metal coating layer is formed on the surface of an inner core particle by this process, and all or part of the inner core particle is removed by an inner core removal process, which is a process following this process and described below. Accordingly, the metal coating layer remains as the above-described metal layer.

The inner core particle according to the present invention is preferably a polymer resin particle containing a polymer resin, and the polymer resin may be a conventionally known polymer resin that may be pyrolyzed. The polymer resin may preferably be a polymethyl methacrylate resin, polyacrylonitrile, a polystyrene resin, an acrylonitrile-styrene-butadiene resin, a vinyl resin, a polycarbonate resin, a polyacetal resin, a polysulfone resin, a polyphenyloxide resin, a polyester resin, a polyolefin resin (e.g., polyethylene, polypropylene, polybutylene, or the like), or a polyurethane resin, and may be used alone or in combination of two or more thereof.

The shape of the inner core particle according to the present invention is not particularly limited, and may be, for example, a spherical, platy, fibrous, or amorphous shape. Also, as the inner core particle, a hollow particle having an empty space formed therein or a porous particle having a plurality of pores formed in the surface thereof may be used, and for example, a hollow spherical particle, a porous spherical particle, or the like may be used. However, the inner core particle in the present invention is not limited thereto, and any particle that does not have an empty space therein or is not porous may also be used.

Although there is not limitation on the particle size distribution of the inner core particle according to the present invention, it is preferable to use a particle having a narrow particle size distribution with a particle size distribution coefficient of variation (C.V) of 20% or less, as calculated by the following Equation 1, in terms of the size and uniformity of the conductive metal particles. Coefficient of variation (C.V, %) = (Standard deviation of particle diameter/Average particle diameter) × 100

Generally, in the case of non-hollow particles, it is easier to manufacture particles having a narrow particle size distribution. In the present invention, even when non-hollow core particles are used, hollow conductive metal particles may be manufactured through an inner core removal process and annealing process to be described below, and as a result, hollow conductive metal particles having a narrow particle size distribution may be more easily manufactured.

However, according to the present invention, since a good electrical connection may be provided to connection targets due to good softness, even when inner core particles having a broad particle size distribution are used, a good electrical connection may be provided to connection targets due to their good softness. For example, even when inner core particles having a broad particle size distribution with a C.V value of 33% or less, preferably, 40% or less or 50% or less are used, the hollow conductive metal particles manufactured according to the present invention may provide a good electrical connection to connection targets due to their good softness.

The size of the inner core particle according to the present invention is not particularly limited, and for example, the average particle diameter thereof may be 0.01 µm or more and 1,000 µm or less, preferably 0.1 µm or more and 500 µm or less, and more preferably 0.5 µm or more and 300 µm or less.

For connection of electronic circuits and the like, it is preferable to use spherical inner core particles having an average particle diameter of 0.5 µm or more and 1,000 µm or less, more preferably, 1 µm or more and 300 µm or less.

In an embodiment, the metal coating layer may be formed on the surface of the inner core particle by a plating process, and for example, an electroless plating process may be used. Alternatively, the metal coating layer may be formed by a known coating process of forming a metal layer on the surface of the core particle, and for example, deposition, sputtering, or the like may also be used.

When a plating process is used for metal coating, the metal coating layer formation process may involve known plating processes, including a surface etching process (surface modification process) of removing impurities from particles and increasing surface roughness, a process of forming a catalyst nucleus (Pd, Ag, or the like) required for the initial deposition of electroless plating (i.e., a sensitization process of adsorbing a reductive ionic material (Sn or the like) onto a material surface), an activation process of attaching a catalyst nucleus to induce reduction of a plating, a process of dissolving precious metal ions in a reactor through a surface treatment process required for acceleration for improving reactivity, then adding the resultant and a reducing agent to a plating solution, and performing plating treatment, and the like. In an embodiment, a process that does not use expensive precious metal ions may also be selected.

### <Inner core removal process>

This process is a process of removing all or part of the inner core particle from the inner core particle having the metal coating layer formed thereon through a pyrolysis process, and as a result, hollow metal particles having a metal layer are manufactured. In the present invention, all or part of the inner core particle may be removed to eliminate or reduce deformation resistance that may be generated due to the inner core when the conductive metal particles are subjected to external pressurization. In the present invention, the hollow metal particles which are a product of the inner core removal process, refer to particles having an empty space formed in the inside adjacent to the metal coating layer because all or part of the inner core particle that supports the metal coating layer is removed in the inner core removal process. Also, not only particles having an empty space formed throughout the inside of the metal coating layer by removing all of the inner core particle but also particles having an empty space formed in the inside adjacent to the metal coating layer even when an inner core particle material or a pyrolysis product remains by removing only a part of the inner core particle are referred to as hollow metal particles because deformation resistance may be eliminated or reduced. For example, even when the inner core particle is pyrolyzed by a pyrolysis process in the inner core particle removal process and then gasified and discharged to the outside of the metal layer as described below, a small amount of carbon material produced by carbonizing the inner core material may remain as a pyrolysis product of the inner core particle material inside the metal coating layer, and these particles are also the hollow conductive metal particles according to the present invention.

In this process, to pyrolyze the inner core particle as described below, the conductive metal particles are heated at a predetermined heating temperature set according to a pyrolysis temperature of the inner core particle for a predetermined heating time. For example, in this process, a pyrolysis process may be performed using a furnace set under process conditions of a heating temperature set according to a pyrolysis temperature of the inner core particle and a heating time. In this case, in order to prevent particle agglomeration during the heating process as much as possible, it is preferable to use a rotary furnace, an air floating-type furnace, or the like as the furnace.

In addition, in this process, heating is preferably performed in an inert gas (e.g., argon, nitrogen, or the like) atmosphere.

Generally, the behavior of polymer resins varies depending on heat. Depending on the polymer properties, molecular weight, and molecular structure of polymer resins, the glass transition temperature (Tg), crystallization temperature (Tc) (if there are crystals), and melting temperature (Tm) of a polymer are considered. In this process, for pyrolysis performed at a temperature above the above-described thermal behavior temperature of a polymer resin, the pyrolysis process is a process of heating a polymer resin at a heating temperature above a pyrolysis temperature for a predetermined time to break the polymer chain of the polymer resin into monomer and/or molecular units by heat and accordingly gasify the resin. Therefore, the pyrolysis process is a process of decreasing the weight of the original polymer of the polymer resin relative to that before heating. In other words, the pyrolysis temperature of a polymer resin in the present invention is a temperature so that the weight of the polymer resin is decreased by gasifying the polymer resin due to pyrolysis through heating, and such a pyrolysis temperature may be determined by measuring a change in weight using a thermogravimetric analysis (TGA) device while heating the polymer resin. Such a pyrolysis process is more easily performed for thermoplastic resins, but the present invention is not limited thereto, and in the case of thermosetting resins such as epoxy and the like, as a polymer resin is pyrolyzed and gasified, the weight of original polymer of the polymer resin may decrease relative to that before heating. According to this process, the polymer chain of the polymer resin of the inner core particle is broken at a temperature above a pyrolysis temperature to gasify the resin, the resin on the surface of the inner core particle is gradually pyrolyzed, and thus the gas resulting from the pyrolysis passes through the metal coating layer, and as a result, the inner core particle is reduced and/or removed. In this case, the gas may be discharged to the outside by passing through micropores formed in the metal coating layer, and the micropores which allow the gas to be discharged may be present at least in the inner core removal process. In other words, when the coating layer is formed on the inner core particle in the metal coating layer formation process, fine holes or cracks may be present in the metal coating layer, and the internal gas may be discharged to the outside of the particle through the micropores in the pyrolysis process. Alternatively, micropores are formed in a thin portion of the metal coating layer formed in the metal coating layer formation process through pressurization caused by the internal gas produced in the pyrolysis process, and the internal gas may be discharged to the outside of the particle therethrough. To this end, in the metal coating layer formation process, it is preferable to form the metal coating layer to have a thickness so that the internal gas produced by pyrolysis in the inner core removal process can be discharged to the outside, that is, a thickness so that micropores through which the internal gas can be discharged to the outside in the inner core removal process are formed in advance or can be formed. Here, the micropores refer to the passages through which the internal gas can be discharged to the outside of the particle, and the shape thereof is not limited.

In this process, a small amount of carbonized carbon material as a pyrolysis product of the inner core material may remain in the metal coating layer. Alternatively, in this process, as part of the inner core particle remains without being pyrolyzed, part of the inner core material may remain inside the metal layer.

A heating temperature of this process may vary depending on the type of polymer resin. As described above, the heating temperature is preferably above a pyrolysis temperature of the polymer resin constituting the inner core particle, at which the polymer chain of the polymer resin is broken into monomer and/or molecular units by heat to gasify the resin.

Generally, the polymer resin begins to be pyrolyzed at 250 to 600 °C, and the weight of the resin is decreased by the pyrolysis. Therefore, the heating temperature of the inner core removal process according to the present invention may be in a range of 250 to 800 °C, preferably, 250 to 600 °C.

In the present invention, the weight loss behavior of the polymer resin according to a heating temperature is analyzed using a TGA device to measure a pyrolysis temperature at which the weight of the polymer resin is decreased by gasification, and a heating temperature may be set to a temperature above the pyrolysis temperature. For example, when the X-axis represents the heating temperature and the Y-axis represents the weight of conductive particles with an inner core containing a polymer resin, the point with the steepest slope in the curve of a weight change measured while increasing a heating temperature may be set as a reference pyrolysis temperature value, and a heating temperature may be set based on the reference value. For example, the reference value itself may be set as a heating temperature of the inner core removal process, or a heating temperature may be set in a predetermined variation range within the reference value, for example, in a variation range of 80%, 70%, 50%, 30%, 10%, 5%, or the like of the reference value, but the present invention is not limited thereto. Also, when a weight change is measured using a TGA device, a temperature increase rate of the heating temperature may be set to any temperature per unit time, preferably, 100 °C/min, 50 °C/min, 30 °C/min, 15 °C/min, 5 °C/min, 3 °C/min, or the like.

In addition, in this process, heating may be performed by gradually raising a temperature until the above-described heating temperature is reached. The pyrolysis of the polymer resin at low temperature requires a very long time, and the pyrolysis of the polymer resin at high temperature may cause severe damage to the surface of the metal coating layer due to rapid gas generation. Therefore, in this process, it is preferable to perform heating by gradually raising a temperature until the above-described heating temperature so that the metal coating layer is not broken.

In this process, the inner core is gasified through pyrolysis and thus discharged through micropores formed in the metal coating layer. In this case, the surface of the inner core particle in contact with the metal coating layer is first pyrolyzed, and the density of the surface of the core particle is decreased. In this process, the mass of the inner core is gradually decreased as a heating time elapses, and ultimately, hollow metal particles in which the inner core is not substantially present inside the metal coating layer may be produced. However, as described above, in the inner core removal process according to the present invention, it is also possible to terminate heating while part of the inner core remains and an empty space is formed between the metal coating layer and the inner core. The remaining inner core may be further pyrolyzed in an annealing process to be described below.

When a heating temperature of this process is excessively higher than the pyrolysis temperature of the polymer resin of the inner core, the pyrolysis and gasification of the polymer resin excessively rapidly proceed, and thus when the gas resulting from the pyrolysis is discharged to the outside of the metal coating layer, the metal coating layer may be broken. Alternatively, when a heating temperature of this process is excessively low or a heating time is excessively short, the inner core is not sufficiently pyrolyzed, and an excessive amount of the inner core material remains. As a result, the inner core is rapidly pyrolyzed in a heating process at a higher temperature in an annealing process to be described below, and thus the pressure of gas inside the metal layer may excessively increase, thereby resulting in the metal coating layer being broken. Therefore, in this process, it is preferable to set a temperature and time for heating the inner core particle so that the metal layer is not broken in the inner core particle removal process and an annealing process.

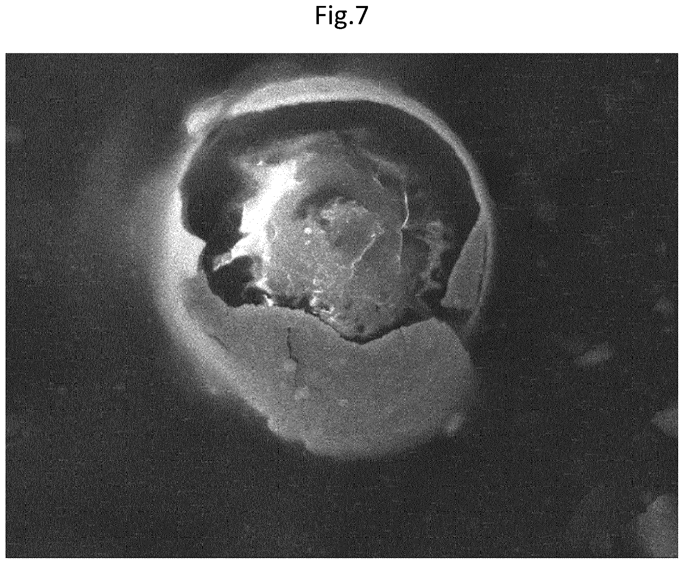

Although 100% pyrolysis of the core particle is possible in this process, since an annealing process is subsequently performed at a higher heating temperature after the pyrolysis of the core particle in this process in the present invention, 100% of the core particle does not need to be pyrolyzed. However, when there is an excessive amount of the pyrolytic residue of the inner core particle in this process, rapid gasification and an increase in pressure of the internal gas inside the metal layer due to a higher heating temperature in a subsequent annealing process may cause the metal layer to be broken (FIG. 7), and therefore, it is preferable that the mass of the pyrolytic residue of the inner core particle is below a predetermined range.

Therefore, the heating in this process needs to continue at least until the mass of the inner core material remaining after the pyrolysis of the inner core in this process is decreased so that the metal coating layer is not broken due to rapid pyrolysis of the remaining inner core in a subsequent annealing process. To this end, the heating in this process may continue at least until the total mass of the inner core particle and a pyrolysis product after this process relative to the mass of the inner core particle before this process is decreased to 90% or less, preferably 50% or less, more preferably 10% or less, 5% or less, 3% or less, and even more preferably 1% or less, 0.1% or less, 0.01% or less. Although the upper limit of the heating time of this process is not particularly limited, since there is no longer a need to continue heating for a long time when the inner core is pyrolyzed and discharged so as to satisfy the above-described requirement, the upper limit of the heating time may also be set in a range that satisfies the above-described requirement.

In this process, as all or part of the inner core particle is removed, deformation resistance that may be generated when the inner core particle is present in the original size may be eliminated or reduced.

In an embodiment, when a polymethyl methacrylate (PMMA) resin is used as the polymer resin, the inner core particle may be pyrolyzed at a heating temperature of 250 to 600 °C, preferably, 380 to 500 °C for a heating time of 30 minutes to 3 hours to remove all or part thereof.

Through this process, the conductive metal particles become hollow conductive metal particles in which all or part of the inner core particle that supports the metal layer inside the metal layer is not present in the conductive metal particle.

### <Annealing process>

This process is a process of annealing the hollow metal particles manufactured in the inner core removal process to manufacture the hollow conductive metal particles with softness according to the present invention. The annealing process is intended to stabilize the stress and structure of the metal coating layer to decrease the hardness and strength of the metal and accordingly improve shapeability. In the present invention, in addition to stabilization of the metal structure, shapeable hollow metal particles with softness are manufactured through the process of annealing the hollow metal particles manufactured in the inner core removal process.

To this end, in this process, conductive metal particles are heated at a temperature above the heating temperature of the inner core removal process and below the melting point of the metal layer.

In addition, in this process, heating is preferably performed in an inert gas (e.g., argon, nitrogen, or the like) atmosphere.

In the present invention, a heating temperature for annealing the metal may be set according to a material of the metal layer. It is known that, when the metal layer is nickel according to an embodiment of the present invention, a recrystallized aggregate structure is formed at a recrystallization temperature of about 600 °C after the pyrolysis process, and an aggregate structure is formed at 680 °C (Journal of Heat Treatment Engineering, Vol. 21, No. 3, 2008).

In the present invention, the hardness of the nickel metal layer may be decreased by forming a recrystallized aggregate structure, thereby obtaining the softness of the nickel metal layer.

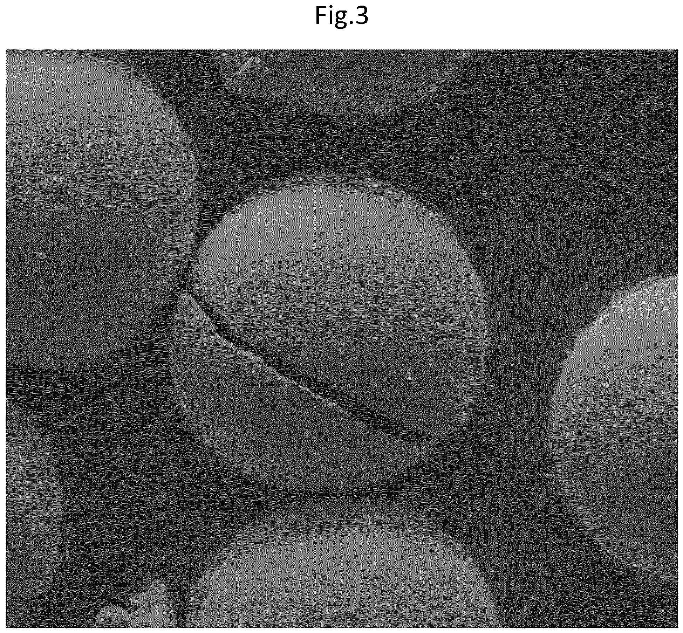

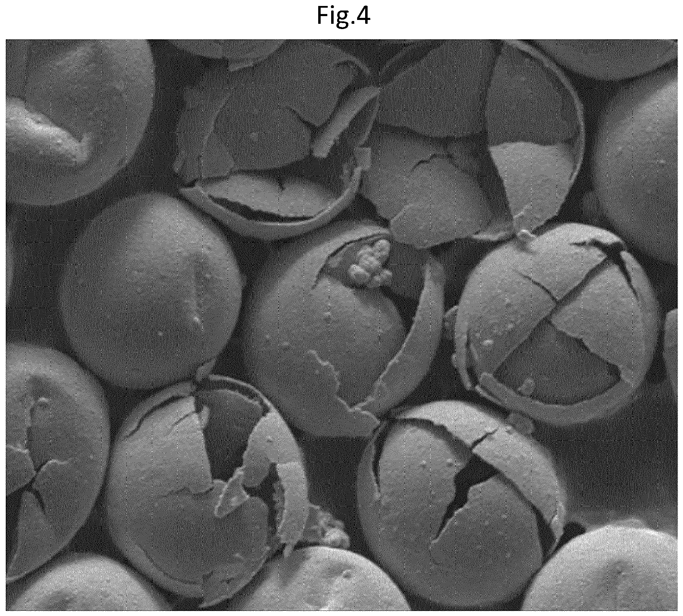

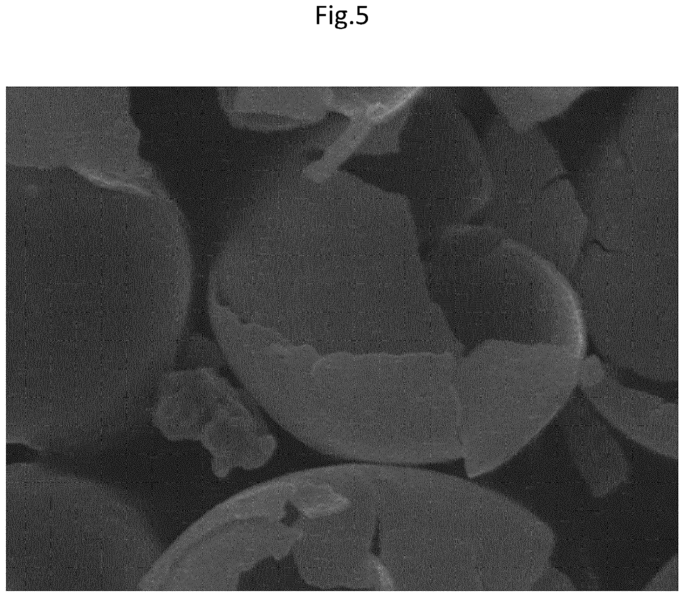

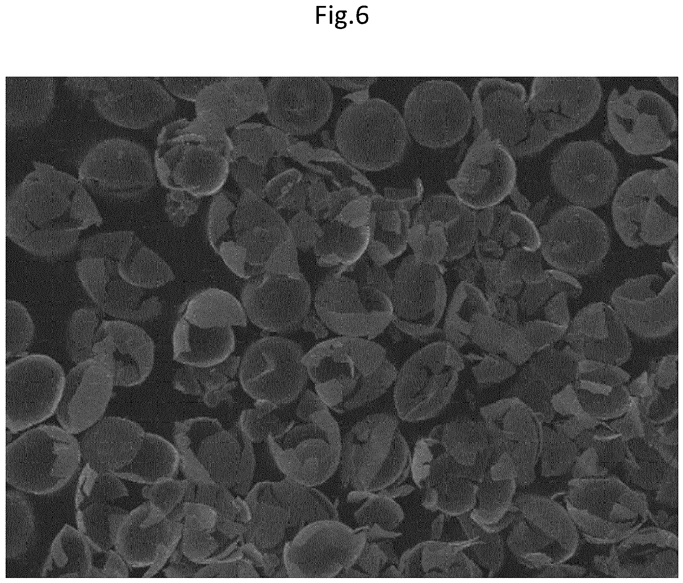

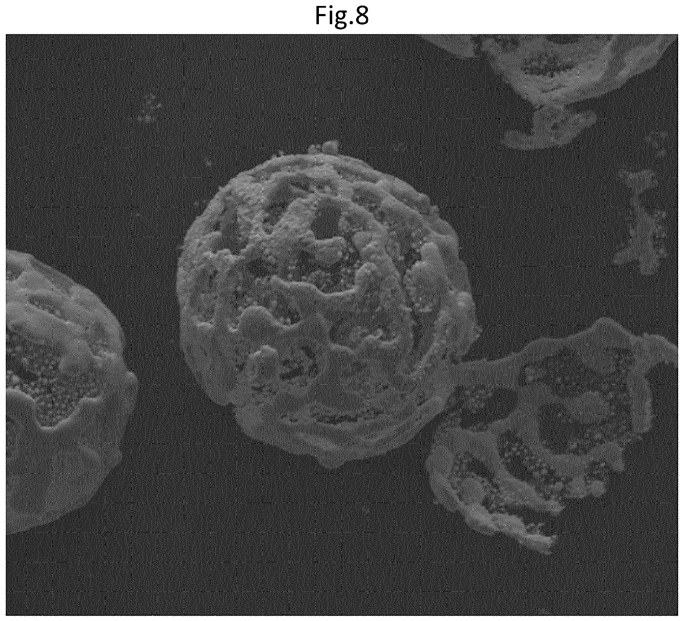

The hollow nickel particles according to the present invention may be manufactured to have softness when a heating temperature of the annealing process is 600 °C or higher and lower than 850 °C, and more preferably have stable softness when a heating temperature of the annealing process is 625 °C or higher, 650 °C or higher, and 750 °C or lower, 725 °C or lower. When annealing is performed at a heating temperature of lower than 600 °C, softness is decreased, and thus many hollow nickel particles are broken when pressurized. Therefore, it is preferable to perform annealing at 600 °C or higher which is a temperature at which a recrystallized aggregate structure is formed. FIGS. 3 to 6 are images showing the form of hollow nickel particles manufactured when annealing is performed at a heating temperature of lower than 600 °C after pressurization of the particles, and these images show that the softness effect is highly decreased and thus the particles are not softly deformed but broken by an external force. Meanwhile, FIG. 8 is an image showing the form of nickel particles manufactured when annealing is performed at a heating temperature of 850 °C or higher, and when a heating temperature is 850 °C or higher, self-deformation occurs sequentially starting from the weak part due to the thickness variation of the metal layer, and thus the surface becomes discontinuous, and the continuity of the nickel metal layer is severely damaged in the remaining areas except for the thick surface region. The conductive particles whose continuity is severely damaged cause a significant increase in contact resistance with connection targets. Therefore, in this process, it is preferable to set a heating temperature for annealing hollow nickel particles to lower than 850 °C.

As described above, it is preferable to set the heating temperature of the annealing process according to the present invention to a temperature above a temperature at which a recrystallized aggregate structure of the metal layer is formed and below a temperature at which the continuity of the metal layer is not damaged after the annealing process. In the present invention, the phrase "the continuity of the metal layer is not damaged" means that a proportion of the area of the metal layer in the total surface area of the conductive metal particles is 80% or more, preferably 90% or more, 95% or more, and more preferably 99% or more, 99.9% or more.

In addition, it is preferable to set the heating time of the annealing process according to the present invention in a range above a heating time at which a recrystallized aggregate structure of the metal layer is formed and below a heating time at which the continuity of the metal layer is not damaged after the annealing process when heating is performed in the above heating temperature range.

In an embodiment, when a PMMA resin is used as the polymer resin and a gold coating layer is a nickel-containing metal layer, an annealing process of performing heating at a heating temperature of 600 to 800 °C for a heating time of 20 minutes to 3 hours, preferably, 30 minutes to 1 hour may be performed so that the metal layer has softness.

According to this process, crystal changes occur in the metal layer, and thus softness and conductivity may be improved.

In addition, when the metal coating layer is formed in the metal coating layer formation process, impurities may be included, and according to this process, the impurities are removed by decomposition to increase a metal component content in the metal layer, and thus conductivity may be improved. For example, when a nickel metal layer is applied through electroless plating, impurities contained in a reducing agent (sodium hypophosphite, dimethylamine borane, sodium borohydride, or the like), a sensitizing agent (tin (II) chloride or the like), and the like other than the conductive metal impair the conductivity of pure nickel during the electroless plating process, and the impurities are removed by decomposition through the annealing process, and thus the content of a pure nickel metal component increases, thereby improving conductivity.

Additionally, according to this process, even when the inner core material and/or a pyrolysis product remain(s) inside the metal layer after the inner core removal process, it may be further decomposed and/or combusted.

In addition, through the annealing process, the conductive metal particles according to the present invention have softness so that the metal layer is not cracked or broken even when pressurized by an external force within a predetermined range, and preferably have softness so that the force applied at 20% strain at which the metal layer is not cracked or broken is 0.5 mN to 20 mN. Therefore, when the conductive metal particles according to the present invention are pressurized by conductive connection targets, the contact area with connection targets may be increased while the metal layer is not cracked or broken, and as a result, electrical resistance may be reduced in connection with connection targets when current flows.

The thickness of the conductive layer of the conductive metal particles according to the present invention is not particularly limited and may be 0.002 µm or more and 50 µm or less, preferably 0.02 µm or more and 50 µm or less, and more preferably 0.1 µm or more and 20 µm or less, 0.15 µm or more and 15 µm or less.

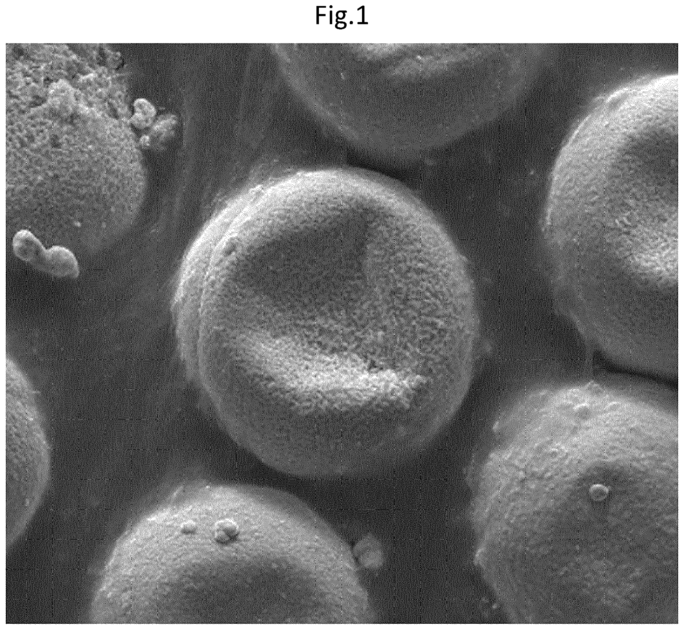

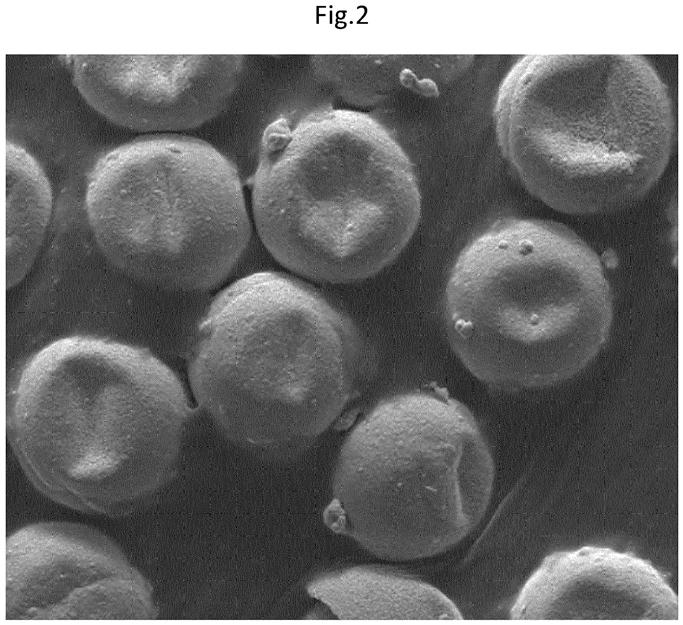

When the hollow conductive metal particles with softness according to the present invention are pressurized and/or heated while being interposed between connection targets, the particles may be deformed without being cracked or broken, and may be freely deformed correspondingly to the surface characteristics and form of connection targets. In an embodiment, the hollow conductive metal particles with softness according to the present invention may be deformed without being broken as shown in FIGS. 1 and 2. Therefore, according to the conductive metal particles of the present invention, the contact area and/or number of contact points with connection targets may be increased, and as a result, contact resistance between the conductive metal particles and connection targets may be reduced to improve conductivity.

### <Additional coating layer formation process>

In an embodiment of the present invention, to reinforce the elasticity, resilience, and/or supporting force of the metal layer of the conductive metal particles, the method may further include an additional coating layer formation process of forming an additional conductive layer on the metal layer.

In an embodiment, a metal layer made of the same material as the previously formed metal layer may be further applied to increase the thickness of the conductive layer, and accordingly, the elasticity of the conductive layer may be improved and electrical resistance may be decreased. Alternatively, a metal layer such as copper, silver, gold, indium, or the like, which has softness itself, may be further applied on the previously formed metal layer to modify the performance of the conductive layer, such as elasticity, deformability, conductivity, and the like.

In an embodiment, an additional metal coating layer may be formed on the surface of the conductive metal particles by a plating process, for example, by an electroless plating process. Alternatively, the coating layer may be formed by a known coating process of forming a conductive material on the surface of core particles, and for example, deposition, sputtering, or the like may also be used.

According to the present invention, it is possible to manufacture hollow conductive metal particles with softness by forming a metal coating layer having conductivity and/or an electron shielding function on inner core particles with various forms and components, and then subjecting the inner core to decomposition and annealing processes. According to the present invention, accordingly, when the conductive metal particles are interposed between connection targets, the contact area with connection targets can be increased, and as a result, contact resistance can be decreased to improve conductivity.

Since the conductive metal particles manufactured according to the present invention are hollow metal particles with softness, their form is changed depending on a pressurization surface during use. Therefore, when the conductive metal particles according to the present invention are used as conductive materials in the form of anisotropic conductive films, heat seal connectors, and tapes for vertical adhesion, even though some of the particles are large, the particles are not broken but deformed when pressurized and also deformed by being pressed to a size equivalent to the distance between terminals or the thickness of a film or coating. Therefore, when the conductive metal particles according to the present invention are used, the contact area in the pressed portion is increased to improve contact resistance, and simultaneously, the form in which large particles protrude is removed, and thus many particles contribute to the connection between terminals to improve connection conductivity, thereby obtaining a product with low surface roughness of a film or coating layer.

The hollow conductive metal particles with softness according to the present invention may be used to conduct current by being in contact with connection targets, and are suitable for use as a conductive material for connection to circuit boards for connecting electrodes, such as anisotropic conductive films (ACFs), heat seal connectors, display panels, other conductive materials, and the like.

### Examples

Hereinafter, the present invention intended to manufacture the hollow conductive metal particles with softness according to the present invention will be described in further detail through examples. However, the scope of the present invention is not limited to these examples.

### [Example 1]

For electroless plating, pretreatment and electroless plating processes to be described below were performed, and spherical polymethyl methacrylate (PMMA) particles (20 µm) having a narrow particle size distribution with a particle size distribution C.V value of 20% or less were used as inner core particles.

### Electroless plating pretreatment process

As a pretreatment process for electroless plating, an etching process (surface modification process) of removing impurities and imparting surface roughness is performed (pretreatment 01-01 process (PT01-01)). Depending on the conditions of a process of manufacturing polymer resin particle powder, impurities are present in the particle powder and need to be removed to obtain uniform plating quality. To this end, an aqueous MEK solution, an aqueous sodium hydroxide solution, an aqueous ethanol solution, hydrochloric acid, an aqueous sulfuric acid solution, an aqueous chromic acid solution, or the like may be used to remove impurities, and the chemicals may be used alone or in combination thereof depending on the condition of the inner core powder.

In Example 1, 4 g of PMMA powder was washed two to three times with an aqueous 80% ethanol solution to remove impurities through physical filtration.

Subsequently, a process of increasing surface roughness was performed so that a plating uniformly adhered to a particle surface. In the process of increasing surface roughness, 7 g of potassium permanganate (KMnO₄) was dissolved in 100 ml of 80 °C distilled water, 6 g of sodium hydroxide (NaOH) was dissolved therein, and PMMA powder was added and stirred for 10 minutes. Then, the resultant was washed several times with distilled water and filtered through filter paper to increase surface roughness, thereby obtaining PMMA powder for an inner core with a rough surface on which nickel can be easily reduced and attached in a subsequent process.

Afterward, the PMMA powder was stirred in 100 ml of an aqueous 2% ammonium hydroxide (NH₄OH) solution for 10 minutes, washed several times with distilled water, and filtered through filter paper to neutralize the inner core powder with a finely rough surface, and the powder was washed several times and filtered to neutralize it to pH 5 to 6, thereby obtaining an inner core powder with a rough surface (PT01-02 process).

Subsequently, 2 g of tin (II) chloride (SnCl₂) was dissolved in 100 ml of 50 °C distilled water, and the inner core powder with increased roughness and reinforced adhesion after the pretreatment was stirred therein for 10 minutes, washed several times with distilled water, and physically filtered to activate the inner core powder so that a chemical plating reaction on the surface occurred well (PT02-01 process).

The activated inner core powder was dissolved in 100 ml of 55 °C distilled water, and 0.1 g of palladium (II) chloride (PdCl₂) was dissolved therein and stirred for 10 minutes so that palladium (Pd) microparticles were produced on the surface of the inner core powder (PT02-02 process).

In order to activate the reaction of the Pd microparticles produced on the inner core powder particle surface, 10% hydrochloric acid (HCl) was added to 100 ml of 50 °C distilled water, and the inner core powder was added thereto, stirred for 10 minutes, washed several times with distilled water, and physically filtered to prepare a powder with a Pd catalyst attached to the surface (PT02-03). Accordingly, the pretreatment process of the inner core powder was completed.

### Electroless plating process

In order to form a plating layer on the surface of the inner core powder whose surface has been treated in the pretreatment process, Ni chloride or Ni sulfide and a reducing agent such as an aqueous solution of sodium hypophosphite, dimethylamine borane (DMAB), hydrazine, or the like may be used, and they may be used in combination of two or more thereof.

In addition, a stabilizer and a dispersant may be used for effective electroless nickel deposition in the plating process according to the present invention. Although not particularly limited, for example, a nonionic surfactant, a cationic surfactant, or a water-soluble polymer material may be used. As the nonionic surfactant, polyoxyalkylene ether-based surfactants such as polyethylene glycol, polyoxyethylene alkyl ether, polyoxyethylene alkyl phenyl ether, and the like may be used, and as the cationic surfactant, betaine-based surfactants such as alkyl dimethyl acetate betaine, alkyl dimethyl carboxymethyl acetate betaine, and alkyl dimethyl amino acetate betaine, and the like may be used. As the water-soluble polymer, polyvinyl alcohol, polyvinyl pyrrolidone, hydroxyethyl cellulose, and the like may be used. Also, compounds of Group IV elements (i.e., selenium-based compounds, thiourea, thiocyanates, and the like), unsaturated organic acids (i.e., maleic acid, itaconic acid, and the like), oxygen-containing anions (i.e., molybdate anions and the like), cetyltrimethylammonium bromide (CTAB), or the like may be used. In addition, as a complexing agent, citrate, hydroxyacetic acid, tartaric acid, malic acid, gluconic acid, sodium acetate, sodium citrate, glycine, and the like may be used. Also, they may be used in combination of two or more thereof.

In Example 1, the above-exemplified chemicals were selectively used to perform an electroless reduction reaction as follows.

In this example, to improve dispersibility before an electroless reduction reaction was performed, the inner core powder pretreated through the plating pretreatment process (PT01-01 to PT02-03) was added to 100 ml of 70 to 75 °C distilled water, and 0.01 g of PVP and 0.01 g of CTAB were added thereto and stirred for 20 minutes to prepare a pretreated inner core powder solution.

Afterward, a solution containing 1 mole of Ni sulfide and 1 mole of glycine was prepared in a 100 ml beaker, and a solution containing 2 moles of sodium hypophosphite and 1 mole of hydrazine as reducing agents and 1 mole of sodium hydroxide as a pH adjuster was separately prepared in a 100 ml beaker.

The prepared aqueous Ni solution and reducing solution were added in small amounts while stirring 100 ml of the pretreated inner core powder solution whose temperature was maintained at 70 to 75 °C using a micro-rotary metering pump. In this example, dropping was performed for 30 to 60 minutes, and a reaction was induced for 90 to 120 minutes so that plating was performed by stably attaching Ni to the inner core powder and forming a nucleus.

The resulting conductive metal powder was washed several times with distilled water, physically filtered, and dried to finally manufacture conductive metal particles having a nickel plating layer with a thickness of 0.200 to 0.450 µm.

### Inner core removal process

A pyrolysis process needs to be set differently depending on the pyrolytic behavior of a polymer resin. In this example, the PMMA particles used were subjected to a high-temperature decomposition process in which a temperature was raised from a room temperature of about 25 °C to 450 °C for 2 hours and maintained for 1 hour in a furnace with a quartz tube capable of input/output to create an N₂ gas atmosphere. In this case, the inner core was decomposed, gasified, and discharged through pores in the surface of the plating layer, and the surface portion of the inner core particle in contact with the plating layer was first decomposed, and ultimately, the inner core resin did not substantially remain inside the nickel metal layer, thereby manufacturing hollow conductive metal particles plated with a nickel layer. Although a temperature increase rate may be set to 2 to 15 °C/min, in this example, a temperature increase rate was set to 3 to 5 °C/min. Depending on the performance and capacity of the furnace equipment, the temperature increase rate may be changed to avoid severe damage to the plating surface.

### Annealing process

The manufactured hollow conductive metal particles were annealed in the previously used furnace in a N₂ atmosphere for a total of 1 hour while the temperature was raised from 450 °C to 725 °C for 30 minutes and maintained for 30 minutes, and sufficiently slowly cooled in a N₂ atmosphere to manufacture hollow nickel metal particles with softness. Although a final temperature increase rate may be set to 5 to 20 °C/min, in this example, a temperature increase rate was set to 5 to 10 °C/min. Depending on the performance of the equipment, it may be additionally extended by several hours to ensure sufficient annealing.

### [Example 2]

Hollow nickel metal particles with softness were manufactured by performing the annealing process of Example 1, including annealing at a temperature of 750 °C under the same temperature increase and maintenance conditions in a N₂ atmosphere, and sufficiently slow cooling in a N₂ atmosphere.

### [Example 3]

Hollow nickel/silver multi-layer metal particles with softness were manufactured by performing up to the annealing process in the same manner as in Example 1 and additionally plating a soft metal Ag to increase the thickness of a plating layer.

### [Example 4]

Hollow nickel/gold multi-layer metal particles with softness were manufactured by performing up to the annealing process in the same manner as in Example 1 and additionally plating a soft metal Au to increase the thickness of a plating layer.

### [Example 5]

In Example 5, about 1.5 g of hollow polyacrylonitrile (PAN) powder having a tap density (ASTM B527) of 0.2 to 0.4 g/cc was stirred in an aqueous 80% ethanol solution at 65 °C for 50 minutes, washed two to three times with distilled water, and physically filtered to remove impurities. Then, 6 g of sodium hydroxide (NaOH) was dissolved in 100 ml of distilled water, and the treated inner core powder was added thereto and stirred for 10 to 30 minutes. Then, the resultant was washed several times with distilled water and filtered through filter paper to reinforce adhesion so that nickel was able to be reduced and attached well. In the case of the PAN powder, plating on the surface is possible without separately performing a process such as surface etching with a strong solvent, so this process was omitted.

Afterward, the powder was dissolved in 100 ml of 60 °C distilled water, 2 g of tin (II) chloride (SnCl₂) was dissolved in 100 ml of a mixed solution obtained by mixing 50 ml of distilled water and 50 ml of a 20% hydrochloric acid solution, and the powder was stirred therein for 60 minutes, washed several times with distilled water, and physically filtered to activate the powder so that a chemical plating reaction on the surface occurred well.

In this example, the pretreated PAN powder was added to 100 ml of 70 to 75 °C distilled water, and 0.01 g of PVP and 0.01 g of CTAB were added thereto and stirred for 20 minutes.

Afterward, a solution containing 1 mole of Ni sulfide and 1 mole of glycine was prepared in a 100 ml beaker, and a solution containing 2 moles of sodium hypophosphite and 1 mole of hydrazine as reducing agents and 1 mole of sodium hydroxide as a pH adjuster was separately prepared in a 100 ml beaker.

A reaction was induced so that plating was performed by stably attaching the prepared aqueous Ni solution and forming a nucleus.

The resulting conductive metal powder was washed several times with distilled water, physically filtered, and dried to finally manufacture hollow conductive metal particles having a nickel plating layer with a thickness of 0.200 to 2 µm, a nickel plating content of about 80%, and a PAN resin therein. Since the manufactured hollow conductive particles had a hollow inner core, a pyrolysis time could be reduced, but pyrolysis was performed under the same conditions to compare the difference according to a subsequent annealing process.

The obtained conductive metal particles were subjected to the inner core removal process of Example 1, then the annealing process of Example 1 including annealing at a temperature of 650 °C under the same temperature increase and maintenance conditions in a N₂ atmosphere, and sufficiently slow cooling in a N₂ atmosphere to manufacture hollow nickel metal particles with softness.

### [Comparative Example 1]

Hollow nickel conductive particles with no softness were manufactured by performing up to the inner core removal process of Example 1 without the annealing process.

### [Comparative Example 2]

Hollow nickel metal particles with softness were manufactured by performing the annealing process of Example 1, including annealing at a temperature of 550 °C under the same temperature increase and maintenance conditions in a N₂ atmosphere, and cooling in a N₂ atmosphere.

In Comparative Example 2, since the annealing temperature was lower than 600 °C and the softness effect was highly decreased, as shown in FIGS. 3 to 6, the particles were not softly deformed but broken by an external force. Comparative Example 2 showed that as the particles were broken by an external force, conductivity was degraded, and thus resistance was increased.

### [Comparative Example 3]

Hollow nickel metal particles with softness were manufactured by performing the annealing process of Comparative Example 1, including annealing at a temperature of 850 °C under the same temperature increase and maintenance conditions in a N₂ atmosphere, and sufficiently slow cooling in a N₂ atmosphere.

When the annealing process was performed at a temperature of 850 °C or higher, self-deformation occurred sequentially starting from the weak portion due to the thickness deviation of the metal layer, and thus the continuity of the surface was damaged (FIG. 8). Accordingly, the plating layer was severely damaged or agglomerated with only the thick nickel surface remaining agglomerated and the remaining weak portions having surface-free holes. The severely damaged conductive particles exhibited significantly high resistance.

### [Comparative Example 4]

Hollow nickel metal particles with softness were manufactured by performing the annealing process of Example 5, including annealing at a temperature of 550 °C under the same temperature increase and maintenance conditions in a N₂ atmosphere, and cooling in a N₂ atmosphere. Similar to Comparative Example 2, Comparative Example 4 showed that as the particles were broken by an external force, conductivity was degraded, and thus resistance was increased.

**[Table 1]**

| | Type of inner core | Pyrolysis | Annealing | Primary plating | Secondary plating | Powder resistance (10 kgf mΩ, under pressurization) | Softness (force at 20% strain, mN) | No breakage after pressurization |
|---|---|---|---|---|---|---|---|---|
| Example 1 | PMMA particle | 450 | 725 | Ni | - | 6 | 2.9 | O |
| Example 2 | PMMA particle | 450 | 750 | Ni | - | 7 | 2.5 | O |
| Example 3 | PMMA particle | 450 | 725 | Ni | Ag | 6 | 5.3 | O |
| Example 4 | PMMA particle | 450 | 725 | Ni | Au | 5 | 5.8 | O |
| Example 5 | PAN hollow particle | 450 | 650 | Ni | - | 6 | 2.6 | O |
| Comparative Example 1 | PMMA solid | 450 | X | Ni | - | 18 | 17.3 | X |
| Comparative Example 2 | PMMA solid | 450 | 550 | Ni | - | 29 | 5.5 | X |
| Comparative Example 3 | PMMA solid | 450 | 850 | Ni | - | not determined | not determined | not determined |
| Comparative Example 4 | PAN hollow particle | 450 | 550 | Ni | - | 27 | 5.6 | X |

Resistance (mΩ) was determined by putting 6 g (adjusted according to a density) of the conductive particles into a powder resistance analyzer manufactured according to the ASTM D991 standard, applying a load of 10 kgf, and measuring a value after 1 minute of stabilization. Also, whether the particles were broken or not after pressurization was confirmed through SEM images.

Fracture strength was measured at a room temperature of 25 °C and a measurement rate of 0.33 mN/sec using a microhardness tester (FISCHERSCOPE HM2000 model). The force at the length where deformation of 10%, 20%, and 30% of the total particle diameter occurred was measured, and the examples and comparative examples were compared. It is preferable that the force applied representatively at 20% strain is 0.5 mN to 20 mN or less, particularly, 1 mN to 15 mN or less.

The comprehensive assessment (CA) in Table 2 below based on the above characteristic values is expressed as a single numerical value quantified by combining the measurements of three main factors considered in the characteristics of conductive hollow metal particles, such as resistance, softness, and breakage after pressurization. This is obtained as a single numerical value to easily evaluate the complex characteristics of products that have to satisfy several criteria at the same time, and defined as follows. Comprehensive assessment (CA) = (Resistance) × Weight 1 + (Softness) × Weight 2 + (No breakage after pressurization) × Weight 3

As shown in the following Table 2, to easily evaluate the superiority or inferiority of performance indicated by each measurement for the examples and comparative examples, the performance was divided into three levels: good, fair, and poor, and 5 points, 3 points, and 1 point were given, respectively. The weight for each factor was set to determine the superiority or inferiority of performance according to importance. In the following Table 2, weight 1 and weight 3 for essential performance such as resistance and breakage after pressurization, respectively, were set to 3 points, and weight 2 for softness which is the force at 20% strain was increased to 5 points.

**[Table 2]**

| | Type of inner core | Pyrolysis | Annealing | Primary plating | Secondary plating | Powder resistance (10 kgf mΩ, under pressurization) | Softness (force at 20% strain, mN) | No breakage after pressurization | Comprehensive assessment (CA) |
|---|---|---|---|---|---|---|---|---|---|
| Example 1 | PMMA solid | 450 | 725 | Ni | - | 5 | 5 | 5 | 55 |
| Example 2 | PMMA solid | 450 | 750 | Ni | - | 5 | 5 | 5 | 55 |
| Example 3 | PMMA solid | 450 | 725 | Ni | Ag | 5 | 3 | 5 | 45 |
| Example 4 | PMMA solid | 450 | 725 | Ni | Au | 5 | 3 | 5 | 45 |
| Example 5 | PAN hollow particle | 450 | 650 | Ni | - | 5 | 5 | 5 | 55 |
| Comparative Example 1 | PMMA solid | 450 | X | Ni | - | 3 | 1 | 1 | 17 |
| Comparative Example 2 | PMMA solid | 450 | 550 | Ni | - | 1 | 3 | 1 | 21 |
| Comparative Example 3 | PMMA solid | 450 | 850 | Ni | - | 1 | 1 | 1 | 11 |
| Comparative Example 4 | PAN hollow particle | 450 | 550 | Ni | - | 1 | 3 | 1 | 21 |

As shown in Tables 1 and 2, it can be confirmed that the hollow conductive metal particles of Examples 1 to 5 according to the present invention exhibited excellent performance in terms of all of resistance, softness, and breakage after pressurization.

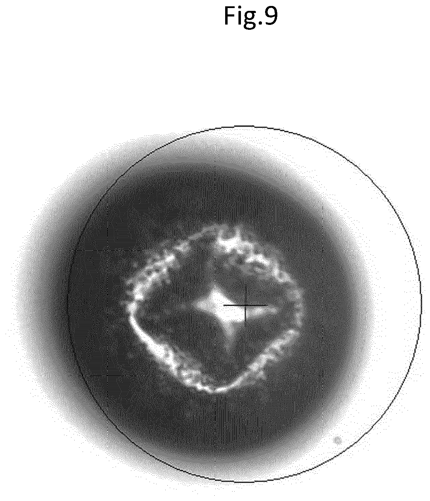

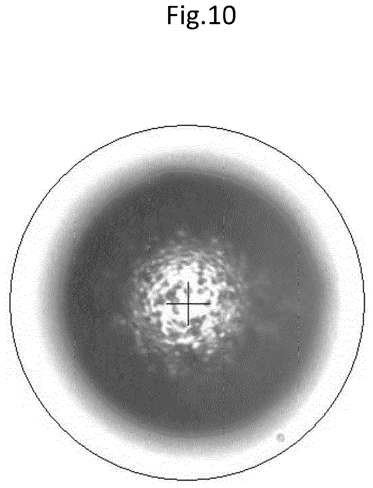

FIGS. 9 and 10 are images after a single conductive metal particle are repeatedly pressurized five times with a pressure of 3 mN using a micro-compression tester (SHIMADZU MCT-510(E) model).

FIG. 9 is an image of the hollow conductive metal particles with softness manufactured according to Example 1 and shows that the particles are deformed well when pressurized, and thus the number of contact points and contact area with pressurization targets increase. On the other hand, FIG. 10 is an image of the conductive metal particles manufactured according to Comparative Example 1 and shows that the particles are not deformed well when pressurized, and thus the number of contact points and contact area with pressurization targets remain substantially unchanged.

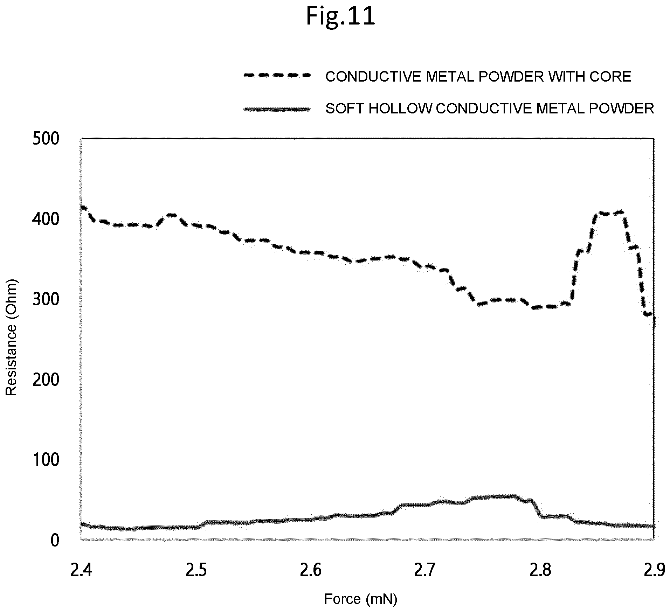

FIG. 11 is a graph of comparing the change in resistance when the hollow conductive metal particles with softness manufactured according to Example 1 and conventional conductive metal particles with a core are pressurized. As shown in FIG. 11, the hollow conductive metal particles according to the present invention have advantageous effects in which softness are improved, the number of contact points and contact area with targets that apply an external force are increased to improve conductivity, and the force at which compressive deformation occurred is small, as compared to conventional conductive metal particles with a core.

## Claims

1. Hollow conductive metal particles with softness, comprising:
a metal layer on a surface thereof; and
a hollow particle structure in which an inner core particle fixed adjacent to an inside of the metal layer is not present and an empty space adjacent to the inside of the metal layer is present,
wherein when the conductive metal particles are deformed at 20% strain by pressurization, there is no portion in which the metal layer is cracked or broken so that it becomes discontinuous.

2. The hollow conductive metal particles of claim 1, wherein when the conductive metal particles are deformed at 20% strain by pressurization while the metal layer is not cracked or broken so that it is not discontinuous, a force applied to the conductive metal particles in the pressurization is 0.5 mN or more and 20 mN or less.

3. The hollow conductive metal particles of claim 1, wherein the metal layer contains at least one selected from the group consisting of copper, silver, gold, indium, nickel, and an alloy thereof.

4. The hollow conductive metal particles of claim 1, wherein the hollow conductive metal particles have an internal solid material that is not fixed adjacent to the inside of the metal layer, and
the maximum particle diameter or length of the internal solid material is 90% or less of the maximum particle diameter of the conductive metal particles.

5. The hollow conductive metal particles of claim 1, wherein the hollow conductive metal particles have an internal solid material that is not fixed adjacent to the inside of the metal layer, and
when the conductive metal particles are deformed at 20% strain by pressurization, the internal solid material does not exert a force to support the metal layer by resisting deformation of the metal layer.

6. The hollow conductive metal particles of claim 1, wherein the hollow conductive metal particles have an internal solid material that is not fixed adjacent to the inside of the metal layer, and
the internal solid material contains at least one of a polymer resin or a carbide thereof.

7. The hollow conductive metal particles of claim 1, wherein the hollow metal particles have a particle diameter of 0.01 µm or more and 1,000 µm or less.

8. The hollow conductive metal particles of claim 1, wherein the metal layer has a thickness of 0.002 µm or more and 50 µm or less.

9. The hollow conductive metal particles of claim 1, wherein the metal layer includes:
a first plating layer; and
a second plating layer formed on the first plating layer and containing at least one selected from the group consisting of copper, silver, gold, indium, nickel, and an alloy thereof.

10. A method of manufacturing the hollow conductive metal particles according to any one of claims 1 to 9, the method comprising:
an inner core particle removal process of heating conductive metal particles in which an inner core particle containing a polymer resin is coated with a metal layer to remove all or part of the inner core particle; and
an annealing process of heating the conductive metal particles to a temperature equal to or higher than a heating temperature of the inner core particle removal process.

11. The method of claim 10, further comprising, before the inner core particle removal process, a metal coating layer formation process of coating the inner core particle containing a polymer resin with a metal layer.

12. The method of claim 10, further comprising, after the annealing process, a process of forming an additional metal layer coating on the metal layer.

13. The method of claim 10, wherein the polymer resin contains at least one resin selected from a polymethyl methacrylate resin, polyacrylonitrile, a polystyrene resin, an acrylonitrile-styrene-butadiene resin, a vinyl resin, a polycarbonate resin, a polyacetal resin, a polysulfone resin, a polyphenyloxide resin, a polyester resin, a polyolefin resin, and a polyurethane resin.

14. The method of claim 10, wherein the inner core particle has a spherical, platy, fibrous, or amorphous shape.

15. The method of claim 10, wherein the inner core particle has a particle size distribution coefficient of variation (C.V) of 40% or less as calculated by the following Equation 1. Coefficient of variation (C.V, %) = (Standard deviation of particle diameter/Average particle diameter) × 100%

16. The method of claim 10, wherein a heating temperature of the inner core particle removal process is set to a temperature equal to or higher than a pyrolysis temperature at which the polymer resin of the inner core particle is gasified by breaking the polymer chain of the resin by heat in the conductive metal particle.

17. The method of claim 16, wherein in the inner core particle removal process, the gasified resin is discharged to the outside of the metal layer through pores formed in the metal layer.

18. The method of claim 10, wherein after the inner core particle removal process, an inner core material remains inside the metal layer, and
the mass of the inner core material is 90% by mass or less relative to the mass of the inner core particle before the inner core particle removal process.

19. The method of claim 10, wherein a heating temperature of the annealing process is set to a temperature equal to or higher than a temperature at which a recrystallized aggregate structure of the metal layer is formed, and a temperature equal to or lower than a temperature at which a proportion of the area of the metal layer in the total surface area of the conductive metal particles is 80% or more after the annealing process.

20. The method of claim 10, wherein in the inner core removal process, a heating temperature is set to 250 to 600 °C, and a heating time is set to 30 minutes to 3 hours.

21. The method of claim 10, wherein when the metal layer is a nickel-containing metal layer, a heating temperature and heating time of the annealing process are set to 600 to 800 °C and 20 minutes to 3 hours, respectively.
